(19) **Europäisches Patentamt**
**European Patent Office**
**Office européen des brevets**

(11) **EP 2 184 329 A1**

(12) **EUROPEAN PATENT APPLICATION**
published in accordance with Art. 153(4) EPC

(43) Date of publication:
**12.05.2010 Bulletin 2010/19**

(51) Int Cl.:
*C09D 11/02* *(2006.01)*   *C09D 11/10* *(2006.01)*
*D06P 5/30* *(2006.01)*   *B41M 1/26* *(2006.01)*

(21) Application number: **08827907.0**

(22) Date of filing: **12.08.2008**

(86) International application number:
**PCT/ES2008/070163**

(87) International publication number:
**WO 2009/024640 (26.02.2009 Gazette 2009/09)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.08.2007 ES 200702284**

(71) Applicants:
• **Consejo Superior De Investigaciones Científicas**
**28006 Madrid (ES)**
• **Consorci Escola Industrial De Barcelona**
**08036 Barcelona (ES)**

(72) Inventors:
• **VISA CALVÍS, Teresa**
**E-08036 Barcelona (ES)**
• **MANICH BOU, Albert**
**E-08034 Barcelona (ES)**
• **DE CASTELLAR BERTRAN, María Dolores**
**E-08034 Barcelona (ES)**

(74) Representative: **Pons Ariño, Angel**
**Glorieta Ruben Dario 4**
**28010 Madrid (ES)**

(54) **CURABLE INK AND APPLICATIONS THEREOF, IN PRINTING METHODS**

(57)   The present invention concerns a curable ink useful for inkjet injection or for serigraphy, which has a surface tension between 30 and 55 mN/m and a viscosity between 10 cps and 35 cps and is **characterised in that** it comprises the following elements: water with or without an organic solvent as vehicle, a colorant and/or pigment dissolved in water, a UV photocurable resin forming the film, between 20-50% of the weight of the ink, one or more monomers as film flexibilizer and a diluent, a photoiniator and a dispersant and/or surfactant, and optionally for the case of a serigraphy ink, a thickener.

## Description

The present invention discloses a useful ink having a surface tension comprised between 30 and 55 mN/m and a viscosity comprised between 10 and 35 cps. This ink may be used in an inkjet ink printing method for digital printing and also for traditional screen printing, onto a substrate, for example: cotton, polyester cotton, polyester and photographic paper for toner and PC printers.

## FIELD OF THE INVENTION

The chemical field, specifically that of printing inks, whether by means of inkjet or screen printing for use thereof in the textile field or for printer-type machines.

## STATE OF THE ART

The traditional textile printing method comprises different stages, the most cumbersome and that which makes the process more expensive being the preparation of templates and cylinders, in the case of digital printing with inks deposited by an inkjet printer, hereinafter referred to as inkjet inks, this step is eliminated, as the inkjet ink is already deposited onto the substrate during computer-generated design, due to which the process is cheapened and expedited, allowing delivery of the printed product in a much shorter time than when using the traditional printing method.

Digital printing has existed for many years, but its development has been set back by technical difficulties relating to hardware, heads or ink injectors, types of ink and characteristics thereof for this type of printing. However, everyone can see the advantages of this printing, as it implies fast printing of designs, ease of selection of colours, elimination of screen or roller engraving, a printing cost price independent of production volume, reduction in the number of printing-related operations, low impact of printing on the environment and smaller size of printing machinery.

In few years digital printing has undergone a boom due to its ease of production. For this reason, there are inkjet inks and inkjet printers on the market which are undergoing constant evolution, because this is the road to competitiveness in the textile sector.

It must be pointed out that inkjet inks, the colour-producing products of which are soluble dyes, are used in digital textile printing, wherein a different class of dyes is required for each type of fibre, there not being a universal ink for all types of fibres at present. Meanwhile, in the case of pigments, printing is for all types of fibres, but the ink formulation must bear in mind the need to include a binding agent to anchor the pigment to the fibre and the need for an adequate particle size in order not to block the injectors, and avoid a hard feel of the printing. In all cases there is a pre-treatment of the fabrics and a fixation of the dyestuff through the traditional method.

Distinction must also be made between inkjet inks with dyes that are deposited onto the fabric, but in order to fix the colour the textile must be subject to a subsequent treatment and to the relevant washing as in the traditional process, with the ensuing spillage of those chemical products that are not fixed onto the fabric into the sewage, and inkjet inks with pigments that are fixed onto the textile simply by means of heat treatment.

But in both types of inkjet ink a pre-treatment of the fabric is necessary, as the ink must not block the inkjet injectors and must have an adequate formulation to become fixed onto the substrate, and some of the products necessary for fixation cannot be in the ink formulation. This is the case with the inks currently available on the market.

The present invention indicates the preparation of an inkjet ink for digital printing but that is deposited onto the fabric directly by means of ultraviolet (UV) radiation curing without the need for pre-treatment or posttreatment of the substrate.

Despite the fact that there are different patents wherein UV-curable inks that can be applied to textiles are disclosed, in the book edited by Ujie, "Digital printing of textiles" published in 2006 (1), no UV-curable ink destined to textiles is mentioned, which means that these types of inks have not yet effectively emerged in this sector, probably due to the great difficulty in obtaining the resistances and flexibility required by certain textiles.

Patent ES 2 208 111 B1 (2) discloses a semi-aqueous water/acetone UV-curable ink for textiles, but the colours range from pale to medium in intensity, and the only available colours were red, yellow and blue, and not black, and it also discloses another non-aqueous ink but with only two colours, yellow and red, also of low intensity and black-coloured ink is not achieved, and the addition of dyes to the ink was subsequent to extracting the dyestuff from the commercial dye using acetone, which is cumbersome and more expensive. Evidently, more colours are necessary so that we can have the whole range of colours and the industry can use these types of inks.

Some of the advantages of digital printing include lowered costs, partially due to the fact that the amount of ink deposited using this method, around 20 g/m$^2$, is much smaller than using the traditional method, around 100 g/m$^2$, and also because the digital process uses basic colours that are always the same, which can include yellow, orange, magenta, blue, turquoise (cyan) and black (CMYKOB), and it is the software of the machine that deposits the inkjet ink which seeks the proportions to prepare a specific colour, a process that saves time in the preparation of colours for each sample.

Therefore, it discloses that in the field of non-ultraviolet curable inkjet inks for textiles there are four types of inks (Ref. 1, page 92), that which uses acid dyes for wool, silk and nylon, reactive dyes for cellulosic fabrics, disperse dyes for polyester and pigments for all types of fibres. In this manner, different inkjet inks have been formulated for textiles and marketed by different firms such as BASF (3), CIBA (4) and Kimberley-Clark (its technology being acquired by Sensient Technologies Corporation in 2002) (5), but the fabrics require prior preparation (6) US Patent Number 6479412 B1, (7) US Patent Number 6838498. These aforementioned inkjet inks are not interchangeable, which means that the same brand of ink must always be used.

Different major printer firms work with certain non-ultraviolet curable inks, for example the Artistri TM 2020 printer uses SeiKo Printek heads and inks prepared by DuPOnt (Ref. 1, page 72), in addition to Mimaki Engineering Co., Ltd with adequate non-UV inks, but these inks do not have high lightfastness (Ref. 1, page 111) and when pigments are used the fabric may have a hard feel.

These inks use textile industry dyes but conveniently purified, for example, the reactives are purified by means of reverse osmosis to separate the salts that accompany commercial dyes, which increases the cost of the ink.

In this patent the dyes are used just as they sold in the textile industry, with their corresponding water bases.

When using pigments it is clear that they must subject be to preparation in order to obtain an adequate particle size so that the printer's inkjet injectors do not become blocked, apart from the preparation with dispersing agents so that the ink solution has the adequate fluidity. In this patent, commercial preparations with aqueous dispersions having an adequate particle size are used for the inkjet ink and screen printing ink.

Ultraviolet radiation-cured inks have been important in the graphic arts sector for many years. For example, the inks marketed by Fujifilm Sericol (Australia), applicable to thick and rigid substrates.

There are UV-cured inks for textiles but for the transfer method, i.e. inks wherein the dyes are disperse, with a small molecule size, easy to sublimate by heating, which are firstly deposited onto paper and then pass onto the polyester fabric as a result of the heat. The resistances will be determined by these types of dyes in polyester.

There are different patents relating to the preparation of ultraviolet-curable inks, i.e. which are dried by UV light polymerisation (8-13); some indicate the application substrate which is paper, glass, plastic or simply indicate the word UV-curable inkjet ink for different substrates. The following components are required in all of these: photopolymerisable oligomers, photopolymerisable monomers as diluents, photoinitiator, dye or pigment and solvent which may be water, organic or a mixture, apart from dispersing agents or humectants and other additives (15, 16) and may be for continuous inkjet or drop-on-demand (DOD) printing.

Evidently, the mixture of all of these ingredients to produce inkjet ink implies that the black ink must have specific properties and characteristics, which has been a challenge for formulators, said properties being low viscosity of between 10-20 cps (17), surface tension of between 23-30 dynes/cm (18) or between 25-60 dynes/cm (19), and if great light and solvent resistance is required, pigments are better than dyes, but the particle size blocks the ink depositing devices, and if dyes are used because resistance is already sufficient, these must be prevented from forming aggregates so as not to also block the injectors.

There are different UV-cured inkjet ink (20) technologies. There are 100% UV-curable inks with zero detachment of volatile products, but the mixture of ink components makes these invalid for many substrates. There is Hot melt inkjet ink that must be liquefied at temperatures other than ambient temperature and aqueous inkjet ink, the latter being the most efficient for inkjet because the water lowers ink viscosity to adequate levels, but the difficulty lies in the fact that the monomers and oligomers suitable for 100% UV-curable inks are not water soluble, and neither are the photoinitiators, which implies the need to develop new products or search for the adequate formulation to combine all the ingredients and obtain the inkjet ink characteristics.

## DESCRIPTION

### Brief Description

An object of the present invention is constituted by an ink that is useful for inkjet or screen printing, hereinafter referred to as ink of the invention, having a surface tension comprised between 30 and 55 mN/m and a viscosity comprised between 10 cps and 35 cps and which comprises the following elements:

> i.- water with or without an organic solvent as a vehicle, where the amount of water is comprised between 15% and 60% of the weight of the ink and the solvent is comprised between 0 and 40% of the weight of the ink,
> ii.- a dye and/or pigment dissolved in water in concentrations of less than 3% and 6% by weight of resin, respectively,
> iii.- a film-forming UV-photocurable resin, between 20% and 50% of the weight of the ink,
> iv.- one or more monomers as film flexibiliser and diluent, between 0 and 30% of the weight of the ink,
> v.- a photoinitiator to carry out resin polymerisation, between 0.5% and 3% by weight of resin in the ink, and
> vi.- a dispersing agent and/or surfactant (between 0 and 7% of the weight of the ink),

and, optionally in the case of a screen printing ink, a thickening agent (between 0.5% and 50% of the weight of the ink).

Another object of the invention is the use of the ink of the invention in an inkjet ink printing method for digital printing and also for traditional screen printing, onto a substrate, belonging, by way of illustration and without limiting the scope of the invention, to the following group: cotton, polyester cotton, polyester and photographic paper for toner and for PC printers.

## Detailed Description

This invention discloses a basic or common composition for ultraviolet radiation-curable inks with dyes of different chemical classes and high-intensity pigments for different substrates, for example, cotton, polyester cotton, polyester and photographic paper for toner and for PC printers, applicable as inkjet inks for digital printing and also for traditional screen printing inks simply by increasing the viscosity of the formula. In both cases printing is achieved without prior preparation of the fabric or subsequent treatments, i.e. the ink is simply deposited and cured, whereupon the fabric or photographic paper is printed.

Another advantage of this ink is that commercial dyes may be used for the textile industry without any additional preparation, in addition to commercial pigments in aqueous dispersion, having a wide range of colours, all necessary for industrial application, with high resistances to different agents, suitable for textiles and photographic paper. High colour intensities are achieved for yellow, orange, red, blue, turquoise, violet, green and black. These colours are obtained using different dye families, not having the previously described need (1) that each type of fibre requires a dye family, achieving high resistances on the different substrates. Direct, reactive, disperse and acid dyes and pigments are used. The fabric does not require prior preparation for fixation of colour, but rather the substrate is printed with high resistances upon polymerisation of the ink by ultraviolet light.

Evidently, the fabric printing process by means of ultraviolet radiation-curable inks will lower the cost of the process and the lead-times for the finished product will be much shorter, in addition to the space required for fabric printing as the machinery used for UV digital printing wherein there are no subsequent treatments for fixing the colour onto the fabric occupies much less space than the traditional machinery for non-ultraviolet digital printing.

Therefore, an object of the present invention is constituted by a dye that is useful for inkjet or screen printing, hereinafter referred to as ink of the invention, having a surface tension comprised between 30 and 55 mN/m and a viscosity comprised between 10 cps and 35 cps and which comprises the following elements:

> i.- water with or without an organic solvent as a vehicle, where the amount of water is comprised between 15% and 60% of the weight of the ink and the solvent is comprised between 0 and 40% of the weight of the ink,
> ii.- a dye and/or pigment dissolved in water in concentrations of less than 3% and 6% by weight of resin, respectively,
> iii.- a film-forming UV-photocurable resin, between 20% and 50% of the weight of the ink,
> iv.- one or more monomers as film flexibiliser and diluent, between 0 and 30% of the weight of the ink,
> v.- a photoinitiator to carry out resin polymerisation, between 0.5% and 3% by weight of resin in the ink, and
> vi.- a dispersing agent and/or surfactant (between 0 and 7% of the weight of the ink),

and, optionally in the case of a screen printing ink, a thickening agent (between 0.5% and 50% of the weight of the ink).

## Composition of the inkjet ink and screen printing ink

### - Vehicle (i)

The water as a vehicle is added alone or to the dye solution, but if it is not sufficient to homogenise all of the products included in the formulation of the ink it may be necessary to add a water-miscible solvent or organic product, such as for example methanol, ethanol, acetone, 2-ethoxyethanol, 2-propanol, 1-methoxy-2-propanol, ethylene glycol butyl ether, glycerin, 1,3-butanediol, 1,4-butanediol, 1,5-pentanediol, 2-pyrrolidone, 1-octyl-2-pyrrolidone, N-methyl-pyrrolidone, gamma-butyrolactone and polyethylene glycol methyl ether.

This organic solvent allows us to obtain an adequate surface tension value of the final ink and provides the homogenisation of the ink components. All of the aforementioned solvents, when in a 90:10 water/solvent mixture, give rise to a surface tension comprised between 30 mN/m and 55 mN/m in accordance with (1) pages 235-236.

The amount of water is comprised between 15% and 60% of the weight of the ink and the solvent is comprised between 0 and 40% of the weight of the ink.

A specific object of the invention is constituted by the ink of the invention, wherein the solvent of (i) is water miscible, and belongs by way of illustration to the following group: methanol, ethanol, acetone, 2-ethoxyethanol, 2-propanol, 1-methoxy-2-propanol, ethylene glycol butyl ether, glycerin, 1,3-butanediol, 1,4-butanediol, 1,5-pentanediol, 2-pyrrolidone, 1-octyl-2-pyrrolidone, N-methyl-pyrrolidone, gamma-butyrolactone and polyethylene glycol methyl ether.

**- Dyes and pigments (ii)**

Dyes dissolved in water in concentrations of less than 3% by weight of resin are used.

Dyes may be selected from among the traditional water-soluble dyes used in the textile industry, without modifying their water bases and are used as they are previously diluted in water or dispersable as they are marketed in disperse, direct, reactive and acid families. The chemical functional groups of the chromophores that give rise to the colour are azo, anthraquinone, phthalocyanine and oxazine. Those with good lightfastness, between 5 and 8, according to the Colour Index (Ref. 14) are selected.

Another specific object of the invention is constituted by the ink of the invention, wherein the dye (ii) is selected from among the traditional water-soluble or dispersable textile dyes as they are marketed in disperse, direct, reactive and acid families, with azo, anthraquinone and phthalocyanine chromophores, having a lightfastness of between 5 and 8, according to the Colour Index.

For example, the following dyes may be used (the firms which have supplied the product are indicated):

- C.I. Dispers blue 56, anthraquinone (Cromaspers Blue FBL) (Cromatex, S.A.),
- C.I. Dispers Red 60, anthraquinone (Cromaspers Red 2BL) (Cromatex, S.A.),
- C.I. Dispers Yellow 3, azo (Sigma-Aldrich),
- C.I. Direct Blue 251, metallised trisazo (Solar Navy Blue BL) (Clariant S.A.),
- C.I. Direct Orange 107, azo (SOLAR Orange 3LG) (Clariant S.A.),
- C.I. Direct Yellow 98, azo (Solar Yellow 3LG) (Clariant S.A.),
- Solar Rubinol 3LRGN (Clariant S.A.),
- C.I. Reactive Blue 116, anthraquinone (Drimaren Turquoise K2B) (Clariant S.A.),
- C.I. Reactive Yellow 125, azo (Drimaren Yellow K2R) (Clariant S.A.),
- C.I. Reactive Violet 33, azo (Drimaren Violet K 2RL) (Clariant S.A.),
- C.I. Reactive Green 21, phthalocyanine (Drimaren Green K5BI) (Clariant S.A.), and
- C.I. Acid Black 48, anthraquinone (Sigma-Aldrich).

On the other hand, if using a pigment the amount of aqueous dispersion of the pigment will be in concentrations of less than 6% by weight of resin. The pigments selected for the inkjet ink and for the screen printing ink are chosen with a very small particle size previously dispersed by the firms, for example the brands Acryjet (Rohm and Haas S.A.) and Tint AYD WCH Plus (Zeus Química S.A.), Cabot-O-Jet (Cabot Corp), Hostajet (Clariant) or perfectly water-soluble dispersed pigments, chosen from among the following:

- C.I. Pigment Red 122, indigoid derived from quinacridone (Acryjet Magenta 127, =Tint-AYD WCH Plus 15 or Hostajet Magenta E5B-PTVP3565 or Cabot-O-Jet magenta 260,
- C.I. Pigment Yellow 74, azo (Acryjet 747 C.I. Pigment Yellow 151 Acryjet 1547, Cabot-O-Yellow 270,
- C.I. Pigment Black 7 Carbon black Acryjet Black 125, Extreme Black 170, Extreme Black 357, Cabot-O-Jet Black 300,
- C.I. Pigment Blue 15:3, phthalocyanine (Acryjet CYAN 157, =Tint-AYD WCH Plus 7), Hostajet Cyan BG-PT VP 2689 and C.I. Pigment Blue 15:4 Cabot-O-Jet Cyan 250,
- C.I. Pigment Yellow 184/PY 138 (Tint-AYD WCH Plus 16),
- C.I. Pigment White 6, Titanium Oxide Tint-AYD WCH Plus 12,
- C.I. Pigment Red 112, Naphthol red monoazo Tint-AYD WCH Plus 10, and
- C.I. Pigment Violet 23, Oxazine Tint-AYD WCH Plus 11.

Another specific object of the invention is constituted by the ink of the invention, wherein the pigment (ii) has a very small particle size previously dispersed or perfectly water soluble.

**- Oligomer or Resin (iii)**

UV-photocurable resin is an oligomer, used alone or in combination, preferably dispersions of acrylic acid ester copolymers combined with polyether-based polyurethanes, dispersions of acrylic acid ester copolymers combined with polyester-based polyurethanes, dispersions of acrylic acid ester copolymers combined with polyether/polyester-based polyurethanes and acrylic acid ester-based dispersions, all water miscible, taking into account that the dilution must be stable over time and compatible with all the ingredients.

The oligomer or acuzone resin forms the film by ultraviolet radiation. The selected resins are those used preferably for wood materials and/or plastics and/or textiles and/or leather and/or metals. They are commercial resins obtained, for example, from BASF S.A., Zeus Química S.A. and Bayer S.A.

The amount of photocurable resin or oligomer may be comprised between 20% and 50%.

Another specific object of the invention is constituted by the ink of the invention, wherein the photocurable resin of (iii) is an oligomer, used alone or in combination, water miscible and preferably belonging to the following group: dispersions of acrylic acid ester copolymers combined with polyether-based polyurethanes, dispersions of acrylic acid ester copolymers combined with polyester-based polyurethanes, dispersions of acrylic acid ester copolymers combined with polyether/polyester-based polyurethanes and acrylic acid ester-based dispersions.

**- Monomers (iv)**

Monomers or a combination thereof are used to flexibilise the film formed by the photocurable oligomers or as resin diluents. These may be *monofunctional*, for example alkoxylated alcohol acrylates such as 2-(2-ethoxyethoxy) ethyl acrylate and 2-ethoxy ethyl acrylate, *difunctional* such as tripropylene glycol diacrylate diacrylates and *trifunctional* such as trimethylolpropane triacrylate. Preferably, the following monomers have been used: tripropylene glycol diacrylate, polyethylene glycol diacrylate, 2-ethoxy ethyl acrylate, trimethylolpropane triacrylate, trimethylolpropane ethoxylate (1 EQ/OH), ethylene glycol dimethacrylate, diethylene glycol ethyl ether acrylate, trimethylolpropane ethoxylate triacrylate (7/3 EQ/OH). All are commercial products, obtained from Sigma-Aldrich.
The amount of monomer is comprised between 0 and 30%.
Another specific object of the invention is constituted by the ink of the invention, wherein the monomer of (iv) is a single type of monomer or a combination thereof and may be *monofunctional*, for example alkoxylated alcohol acrylates such as 2-(2-ethoxyethoxy) ethyl acrylate and 2-ethoxy ethyl acrylate, *difunctional* such as tripropylene glycol diacrylate diacrylates and *trifunctional* such as trimethylolpropane triacrylate.

**- Photoinitiator (v)**

Photoinitiators may be either soluble in the aqueous medium or dispersable and may be formed by a single photoinitiator or a combination thereof. The photoinitiator(s) or combination thereof is/are selected from among those having an absorbance of 0-1 in a dilute methanol solution with a maximum wavelength of 450 nanometres, preferably with a maximum wavelength between 225 and 450 nm.
The photoinitiators are selected with different compositions, for example isopropylthioxanthone, 1-hydroxy cyclohexyl phenyl ketone, 2-hydroxy-2-methyl-1-phenyl-1-propanone, 2-benzyl-2(dimethylamino)-1-4(4-morpholine) phenyl)-1-butanone, 2-methyl-1-(4-methylthio)phenyl-2-(4-morpholinyl)-1-propanone and diphenyl(2,4,6-trimethyl benzoyl)phosphine oxide, and combinations thereof. All are commercial products (Sigma-Aldrich or Ciba).
The concentration will be comprised between 0.5% and 3% by weight of resin in the ink.
Thus, another specific object of the invention is constituted by the ink of the invention, wherein the photoinitiator of (v) is a single type or a combination thereof having an absorbance of 0-1 in a dilute methanol solution with a maximum wavelength of 450 nanometres, preferably with a maximum wavelength between 225 and 450 nm, and belonging, for example, to the following group: isopropylthioxanthone, 1-hydroxy cyclohexyl phenyl ketone, 2-hydroxy-2-methyl-1-phenyl-1-propanone, 2-benzyl-2(dimethylamino)-1-4(4-morphoiine)phenyl)-1-butanone, 2-methyl-1-(4-methylthio)phenyl-2-(4-morpholinyl)-1-propanone and diphenyl(2,4,6-trimethyl benzoyl)phosphine oxide.

**- Dispersing agents and/or surfactants (vi)**

These have been used with different compositions, miscible in water or solvents, used in ink compositions or with disperse dyes or aqueous pigment dispersions. All are supplied by Sigma-Aldrich: Polyethylene glycol monolaurate, Polyethylene glycol mono-oleate, Polyoxyethylene sorbitan monolaurate, Polyoxyethylene sorbitan mono-oleate, Polyethylene glycol methyl ether, Dioctyl sodium sulfosuccinate and lithium 3-[2-(perfluoroalkyl)ethylthio]propionate.
The amount of dispersing agent and/or surfactant is comprised between 0 and 7% of the weight of the ink.
Thus, another specific object of the invention is constituted by the ink of the invention, wherein the dispersing agent and/or surfactant of (vi) is miscible in water with the solvents and belongs, for example, to the following group: polyethylene glycol monolaurate, polyethylene glycol mono-oleate, polyoxyethylene sorbitan monolaurate, polyoxyethylene sorbitan mono-oleate, polyethylene glycol methyl ether, dioctyl sodium sulfosuccinate and lithium 3-[2-(perfluoroalkyl)ethylthio]propionate.

**- Thickening agents in the case of screen printing ink**

Water-soluble thickening agents such as sodium alginates, sodium carboxymethyl cellulose or polyurethane solution in water and diethylene glycol ether are used as thickening agents to reach the adequate viscosity for applying the screen printing paste or ink. All are commercial products supplied by Sigma-Aldrich and Zeus Química S.A.
The amount of thickening agent is comprised between 0.5% and 50%.

Thus, another specific object of the invention is constituted by the ink of the invention, wherein the thickening agent, in the case of screen printing ink, is a water-soluble thickening agent, belonging to the following group: sodium alginates, sodium carboxymethyl cellulose or polyurethane solution in water and diethylene glycol ether.

Another object of the invention is the use of the ink of the invention in an inkjet ink printing method for digital printing and also for traditional screen printing, onto a substrate, belonging, by way of illustration and without limiting the scope of the invention, to the following group: cotton, polyester cotton, polyester and photographic paper for toner and for PC printers.

## EXAMPLES OF EMBODIMENT OF THE INVENTION

### Example 1.- Method for preparing the ink of the invention

#### 1.1.- General standards and devices used

Water-soluble resins are always used. The monomers are resin-soluble, the photoinitiators are monomer-soluble, or resin- or solvent-soluble, while the organic solvents help to increase solubility within the resins of all the components. It is better to use the water-soluble dyes previously dissolved therein and then add the aqueous solution to the other ink components or directly dissolved in the resin.

In the case of disperse pigments or dyes the method is the following: first weigh the aqueous dispersion plus the dispersing agent, add water, shake and add the rest of the components. Finally, filter the ink using a 5-micron or 1-micron filter.

Once the ink has been deposited onto the substrate it must be dried for five minutes at 50ºC, thereby guaranteeing that the UV light will act upon the photoinitiator and this upon the photopolymerisable products, thus achieving better resistances to washing, solvents and friction.

Depending on the amount of ink produced, the ingredients have been mixed using either a Heidolph Reax shaker or Silverson L4RT mixer.

Ink viscosity is measured using a Brookfield DV-E viscosimeter at 20 rpm with the ULTRA Low UL adapter and its spindle.

Surface tension is measured using the Sita Online f10 tensiometer by Neurtek, S.A.

pH is measured using a Crison pH meter with a glass electrode.

Drying at 50ºC is carried out using a Heraeus E-50 Type laboratory heater.

Curing is carried out using a Fusion UV F 300 curing device with UV lamps without electrodes.

**Cure conditions:**

■ D Lamp

$$\text{Cure speed (tape)} = 2.0 - 2.4 \text{ ms}$$

The spectra of the different photoinitiators were recorded using a UV-visible Perkin Elmer Lambda 2 spectrophotometer.

For lightfastness, a Solar Box 1500 e aging camera was used.

The resistances to washing with water and soap, to organic solvents Standard UNE-EN ISO 105 X 05/97, to rubbing Standard UNE-EN ISO 105 X 12/03 and to artificial light Standard UNE-EN ISO 105-B02/ were determined.

#### 1.2.- Preparation of the inks of the invention specific to inkjet for digital printing

In **formula 1** the method is the following: the resin is weighed, the dye in aqueous solution is added, it is shaken, and then the photoinitiator dissolved in the monomer is shaken.

| Formula 1 ink products | % by weight (g) |
|---|---|
| Lux 822 VP UV resin | 45 |
| Drimaren turquoise K2B reactive commercial dye | 0.225 |

(continued)

| Formula 1 ink products | % by weight (g) |
|---|---|
| Water | 31.53 |
| Darocur 1173 photoinitiator | 0.675 g |
| Trimethylol propane triacrylate monomer | 22,5 g |
| Total | 100 |
| * The resin is an aqueous dispersion with 47-49% of total solids, the rest being water. | |

In **formula 2** the method is to weigh the resin, add the aqueous pigment dispersion, the dispersing agent, shake, add the monomer, shake, add the photoinitiator dissolved in methanol and shake.

| Formula 2 ink products | % by weight (g) |
|---|---|
| Lux 822 VP UV resin | 30.27 |
| Acryjet Magenta 127** commercial pigment | 0.968 |
| Water | 21.19 |
| Irgacure 907 photoinitiator | 0.45 |
| Solvent methanol | 30.27 |
| Trimethylol propane triacrylate monomer | 15.3 |
| Polyethylene glycol methyl ether dispersing agent | 1.69 |
| Total | 100 |
| * The resin is an aqueous dispersion with 47-49% of total solids, the rest being water.<br>** Is an aqueous pigment dispersion with 19-21% of solids, the rest being water. | |

## 1.3.- Screen printing ink formula

The method for the screen printing ink is to weigh the resin, add the pigment dispersion, shake the dispersing agent, add the photoinitiator solution, shake, add the thickening agent and shake.

| Screen printing ink | % by weight (g) |
|---|---|
| Lux 338 VP UV resin | 25.85 |
| Tint-Ayd WCH Plus 7 ** commercial pigment | 0.96 |
| Polyethylene glycol methyl ether, Average 550 dispersing agent | 2.16 |
| Irgacure 907 photoinitiator | 0.388 |
| Solvent methanol | 25.85 |
| Rheolate 278*** commercial thickening agent | 44.76 |
| Total | 100 |
| * The resin is an aqueous dispersion with 49-51% of total solids, the rest being water.<br>** Is an aqueous pigment dispersion with 46,8% of water.<br>***Is 25% with 80:20 water/diethylene glycol ether. | |

8

**1.4.- Ink properties**

- Viscosity comprised between 10 and 35 cps for the inkjet ink.
- Surface tension comprised between 30 and 55 mN/m.
- pH comprised between 6.5 and 7.5.
- Resistances of all the inks to laboratory washing with water and soap of between 4 and 5 on the Grey Scale.
- Organic solvent resistances of all the inks of between 4 and 5 on the Grey

Scale for cotton and polyester cotton.

- Rubbing resistances of all the inks and for all the substrates of between 4 and 5 on the Grey Scale.

On photographic paper, ink with dispersing agents is inadequate, but the rest are adequate.

Lightfastness of up to 6 for dyes and more than 7 for pigments.

Higher intensity of the ink formulated with direct dyes with the ingredients of this invention in comparison to the ink obtained in the patent of reference 2.

For example, in the case of two direct dyes, Solar Rubinol 3LRGN and Solar Navy Blue BL, we can observe that the ink of this invention is less light and more intense in comparison to the colour coordinates L*, which is luminosity, and C*, which is chroma or saturation.

Colour coordinate for Illuminant D65 and Observer 10 degrees.

Ink of this invention with Solar Rubinol 3LRGN = AR.

Ink of Patent ES 2 208 111 B1 (see reference 2) with Solar Rubinol 3LRGN = BR.

**Table of coordinates CIELAB L\* a\* b\* C\* H\***

| Ink | L* | A* | b* | C* | H* |
|-----|-----|-----|-----|-----|-----|
| AR | 51.15 | 38.47 | -4.28 | 38.71 | 353.66 |
| BR | 60.38 | 34.13 | -12.72 | 36.43 | 339.56 |

Ink of this invention with Solar Navy Blue BL C.I. Direct Blue 251 = AB Patent ES 2 208 111 B1 (see reference 2) with Solar Navy Blue BL C.I. Direct Blue 251 = BB.

**Table of Coordinates CIELAB L\* a\* b\* C\* H\***

| Ink | L* | a* | b* | C* | H* |
|-----|-----|-----|-----|-----|-----|
| AB | 41.62 | 1.25 | -26.02 | 26.05 | 272.75 |
| BB | 61.98 | -3.86 | -22.21 | 22.54 | 260.14 |

**References / Literature**

1.- Digital printing of textiles Edition by H.Ujie Woodhead Publishing in Textiles 2006.
2.- Patent ES 2 208 111 B1 Mumbru José, Guevara Olivia, Visa Teresa 16,03, 2005.
3.- Siegel, B. International Textile Bulletin Issue No. 2, pages 85-87 1998.
4.- Böhringer, A. International Textile Bulletin pages 8-26 Issue No. 4 2001.
5.- Kimberley-Clark. "Digital Printing" Printing Technology Inc., 1999.
6.- US Patent Number 6479412 B1 Dehya Alfekri et al, 12 November 2002.
7.- US Patent Number 6,838,498, Alyson Salier Bagwell et al, January 4 2005.
8.- US Patent Number 5,623,001 Murray Figov, April 12 1997.
9.- US Patent Number 6,310,115 B1 Luc Vanmale et al, October 30 2001.
10.- US Patent Number 6,743,514 B1 Gamini S. Samaranayake, June 1 2004.
11.- US Patent Number 6,846,851 B2 Gregory Nakhmanovich et al, January 25 2005.
12.- US Patent Number 6,896,937 B2 Richard C. Woudenberg, May 24 2005.

13.- US Patent Number 7,064,153 B2 Frank J. Brucck, June 20 2006.

14.- Colour Index; Third Edition of the Society of Dyers and Colourists and American Association of Textile Chemists and Colorists.

15.- R.E. Todd "Printing Inks" Pira International 1994, pages 129-140 and pages 365-370.

16.- "Surface Coatings" Edition by Swaraj Paul Wiley & Sons, pages 714-787.

17.- Sartomer Application Bulletin, J.A. Klang et al, Sartomer Company 5057 08/02.

18.- A. Hancock, L. Lin Pigment & Resin Technology Volume 33 Issue No. 5 2004, pages 280-286.

19.- Siegel, B. International Textile Bulletin Issue No. 2, pages 85-87, 1998.

20.-Klang, J. and Balcerski, J. Sartomer Application Bulletin 5056 03/05.

**Claims**

1.  Ink useful for inkjet or screen printing, **characterized in that** it has a surface tension comprised between 30 and 55 mN/m and a viscosity comprised between 10 cps and 35 cps and because it comprises the following elements:

    i.- water with or without an organic solvent as a vehicle, where the amount of water is comprised between 15% and 60% of the weight of the ink and the solvent is comprised between 0 and 40% of the weight of the ink,
    ii.- a dye and/or pigment dissolved in water in concentrations of less than 3% and 6% by weight of resin, respectively,
    iii.- a film-forming UV-photocurable resin, between 20% and 50% of the weight of the ink,
    iv.- one or more monomers as film flexibiliser and diluent, between 0 and 30% of the weight of the ink,
    v.- a photoinitiator to carry out resin polymerisation, between 0.5% and 3% by weight of resin in the ink, and
    vi.- a dispersing agent and/or surfactant (between 0 and 7% of the weight of the ink),

    and, optionally in the case of a screen printing ink, a thickening agent (between 0.5% and 50% of the weight of the ink).

2.  Ink, according to claim 1, **characterized in that** the solvent of (i) is water miscible and belongs to the following group: methanol, ethanol, acetone, 2-ethoxyethanol, 2-propanol, 1-methoxy-2-propanol, ethylene glycol butyl ether, glycerin, 1,3-butanediol, 1,4-butanediol, 1,5-pentanediol, 2-pyrrolidone, 1-octyl-2-pyrrolidone, N-methyl-pyrrolidone, gamma-butyrolactone and polyethylene glycol methyl ether.

3.  Ink, according to claim 1, **characterized in that** the dye of (ii) is selected from among the traditional water-soluble or dispersable textile dyes of disperse, direct, reactive and acid families, with chromophores, for example, azo, anthraquinone and phthalocyanine, and with lightfastness of between 5 and 8, according to the Colour Index.

4.  Ink according to claim 1, **characterized in that** the pigment of (ii) has a very small particle size previously dispersed or perfectly water-soluble dispersed pigments.

5.  Ink according to claim 1, **characterized in that** the photocurable resin of (iii) is an oligomer, used alone or in combination, water miscible, preferably belonging to the following group: dispersions of acrylic acid ester copolymers combined with polyether-based polyurethanes, dispersions of acrylic acid ester copolymers combined with polyester-based copolymers, dispersions of acrylic acid ester copolymers combined with polyether/polyester-based polyurethanes and acrylic acid ester-based dispersions.

6.  Ink according to claim 1, **characterized in that** the monomer of (iv) is a single type of monomer or a combination thereof and may be:

    - *monofunctional*, for example, alkoxylated alcohol acrylates such as 2-(2-ethoxyethoxy) ethyl acrylate and 2-ethoxy ethyl acrylate, or
    - *difunctional*, for example, tripropylene glycol diacrylate diacrylates, or
    - *trifunctional*, for example, trimethylolpropane triacrylate.

7.  Ink according to claim 1, **characterized in that** the photoinitiator of (v) is a single type or a combination of photoinitiators with an absorbance of 0-1 in a dilute methanol solution with a maximum wavelength of 450 nanometres, preferably with a maximum wavelength comprised between 225 and 450 nm, and preferably belonging to the following group: isopropylthioxanthone, 1-hydroxy cyclohexyl phenyl ketone, 2-hydroxy-2-methyl-1-phenyl-1-propanone, 2-benzyl-2(dimethylamino)-1-4(4-morpholine)phenyl)-1-butanone, 2-methyl-1-(4-methylthio)phenyl-2-(4-morpholinyl)-1-propanone and diphenyl(2,4,6-trimethyl benzoyl)phosphine oxide.

8. Ink according to claim 1, **characterized in that** the dispersing agent and/or surfactant of (vi) are water- or solvent-miscible and, preferably, belong to the following group: polyethylene glycol monolaurate, polyethylene glycol mono-oleate, polyoxyethylene sorbitan monolaurate, polyoxyethylene sorbitan mono-oleate, polyethylene glycol methyl ether, dioctyl sodium sulfosuccinate and lithium 3-[2-(perfluoroalkyl)ethylthio]propionate.

9. Ink according to claim 1, **characterized in that** the thickening agent, in the case of screen printing ink, is a water-soluble thickening agent, preferably belonging to the following group: sodium alginates, sodium carboxymethyl cellulose or polyurethane solution in water and diethylene glycol ether.

10. Use of the ink according to claims 1 to 9, in an inkjet ink printing method and also for traditional screen printing, onto a substrate.

11. Use according to claim 10, **characterized in that** the substrate belongs to the following group: cotton, polyester cotton, polyester and paper, for example, photographic paper for toner and for PC printers.

# INTERNATIONAL SEARCH REPORT

| International application No. |
| --- |
| PCT/ ES 2008/070163 |

A. CLASSIFICATION OF SUBJECT MATTER

see extra sheet

According to International Patent Classification (IPC) or to both national classification and IPC

B. FIELDS SEARCHED

Minimum documentation searched (classification system followed by classification symbols)

C09D,D06P,B41M

Documentation searched other than minimum documentation to the extent that such documents are included in the fields searched

Electronic data base consulted during the international search (name of data base and, where practicable, search terms used)

INVENES,EPODOC,WPI

C. DOCUMENTS CONSIDERED TO BE  RELEVANT

| Category* | Citation of document, with indication, where appropriate, of the relevant passages | Relevant to  claim No. |
| --- | --- | --- |
| X | US 6294592 B1 (MANFRED HERRMANN et al) 25.09.2001, column 1, columns 7-9. | 1-11 |
| X | EP 1792955 A1 (KONICA MINOLTA HOLD.) 06.06.2007, pages 3, 6 and pages 8-10. | 1-11 |
| X | ES 2220081 T3 (CIBA SPECIALTY CHEMICALS HOLD.) 01.12.2004, pages 6, 8 and 10. | 1-11 |
| A | CA 2598569 A1 (BASF) 31.08.2006, pages 17, 21-24 and 26. | 1-11 |
| A | US 2004201660 A (TOMOYUKI NISHIKAWA et al) 14.10.2004, pages 1-4. | 1-11 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 22 December 2008        (22.12.2008) | **(29/12/2008)** |
| Name and mailing address of the ISA/ O.E.P.M. Paseo de la Castellana, 75 28071 Madrid, España. Facsimile No.   34 91 3495304 | Authorized officer A. Colomer Nieves Telephone No. +34 91 349 55 42 |

Form PCT/ISA/210 (second sheet) (July 2008)

## INTERNATIONAL SEARCH REPORT
Information on patent family members

| | International application No.<br><br>PCT/ ES 2008/070163 |
|---|---|

| Patent document cited in the search report | Publication date | Patent family member(s) | Publication date |
|---|---|---|---|
| US 6294592 B | 25.09.2001 | DE 19727767 A<br>WO 9901517 A<br>EP 0993495 AB<br>EP 19980937502<br>JP 2002508014 T | 07.01.1999<br>14.01.1999<br>19.04.2000<br>18.06.1998<br>12.03.2002 |
| EP 1792955 A | 06.06.2007 | EP 20060124453<br>US 2007126831 A<br>JP 2007177385 A | 21.11.2006<br>07.06.2007<br>12.07.2007 |
| ES 2220081 T | 01.12.2004 | WO 0003079 A<br>AU 5030599 A<br>EP 1144755 AB<br>EP 19990934562<br>US 6443569 B<br>JP 2003518560 T<br>AT 266763 T<br>PT 1144755 T | 20.01.2000<br>01.02.2000<br>17.10.2001<br>02.07.1999<br>03.09.2002<br>10.06.2003<br>15.05.2004<br>29.10.2004 |
| CA 2598569 A | 31.08.2006 | CA 2598970 A<br>WO 2006089935 A<br>WO 2006089934 A<br>WO 2006089933 A<br>DE 102005008932 A<br>DE 102005008931 A<br>KR 20070107785 A<br>EP 1856172 A<br>EP 20060708487<br>EP 1856171 A<br>EP 20060708483<br>EP 1856173 A<br>EP 20060708488<br>CN 101128497 A<br>US 2008145563 A<br>US 2008146691 A<br>US 2008182080 A<br>JP 2008531778 T<br>JP 2008531779 T<br>JP 2008538219 T | 31.08.2006<br>31.08.2006<br>31.08.2006<br>31.08.2006<br>31.08.2006<br>31.08.2006<br>07.11.2007<br>21.11.2007<br>23.02.2006<br>21.11.2007<br>23.02.2006<br>21.11.2007<br>23.02.2006<br>20.02.2008<br>19.06.2008<br>19.06.2008<br>31.07.2008<br>14.08.2008<br>14.08.2008<br>16.10.2008 |
| US 2004201660 A | 14.10.2004 | US 7261407 B<br>JP 2004306469 A | 28.08.2007<br>04.11.2004 |

Form PCT/ISA/210 (patent family annex) (July 2008)

## INTERNATIONAL SEARCH REPORT

International application No.

PCT/ ES 2008/070163

CLASSIFICATION OF SUBJECT MATTER

*C09D 11/02* (2006.01)
*C09D 11/10* (2006.01)
*D06P 5/30* (2006.01)
*B41M 1/26* (2006.01)

Form PCT/ISA/210 (extra sheeet) (July 2008)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2208111 B1
- US 6479412 B1
- US 6838498 B
- US 5623001 A, Murray Figov
- US 6310115 B1, Luc Vanmale
- US 6743514 B1, Gamini S. Samaranayake
- US 6846851 B2, Gregory Nakhmanovich
- US 6896937 B2, Richard C. Woudenberg
- US 7064153 B2, Frank J. Brucck

### Non-patent literature cited in the description

- Digital printing of textiles. 2006
- Digital printing of textiles. H.Ujie Woodhead Publishing in Textiles, 2006
- **Siegel, B.** *International Textile Bulletin,* 1998, 85-87
- **Böhringer, A.** *International Textile Bulletin,* 2001, 8-26
- **Kimberley-Clark.** Digital Printing. Printing Technology Inc, 1999
- Colour Index
- **R.E. Todd.** Printing Inks. *Pira International,* 1994, 129-140365-370
- Surface Coatings. Swaraj Paul Wiley & Sons, 714-787
- **J.A. Klang et al.** Sartomer Application Bulletin. Sartomer Company 5057, August 2002
- **A. Hancock ; L. Lin.** *Pigment & Resin Technology,* 2004, vol. 33 (5), 280-286
- **Klang, J. ; Balcerski, J.** *Sartomer Application Bulletin,* vol. 5056 (03/05